# EUROPÄISCHE PATENTSCHRIFT

(11) **EP 2 396 230 B1**
(45) Veröffentlichungstag und Bekanntmachung des Hinweises auf die Patenterteilung: **15.05.2013**
(21) Anmeldenummer: 10703176.7
(22) Anmeldetag: 29.01.2010
(51) Int. Cl.: F16F 15/04, B65D 25/28

(54) **VERPACKUNGSBEUTEL MIT HANDGRIFF**
PACKAGING BAG HAVING HANDLE
SAC D'EMBALLAGE POURVU D'UNE POIGNÉE

(30) Priorität: 16.02.2009 DE 202009002180 U
(43) Veröffentlichungstag der Anmeldung: 21.12.2011
(73) Patentinhaber: Huhtamaki Forchheim Zweigniederlassung der Huhtamaki Deutschland GmbH & Co. KG, 91301 Forchheim (DE)
(72) Erfinder: SITZMANN, Stefan, 91356 Kirchehrenbach (DE)
(74) Vertreter: Epping - Hermann - Fischer
(86) Internationale Anmeldenummer: PCT/EP2010/051120
(87) Internationale Veröffentlichungsnummer: WO 2010/091968

(56) Entgegenhaltungen:
- DE-B- 1 203 669
- DE-U1- 8 204 931
- US-A- 5 431 334

## Beschreibung

Die Erfindung bezieht sich auf einen Verpackungsbeutel mit zwei Längsseiten, zwei Schmalseiten sowie einer Oberseite und einer Unterseite, aus einer oder mehreren Kunststofffolienlagen, sowie mit einem Tragegriff.

Es sind verschiedene Verpackungsbeutel dieser Art bekannt.

Diese weisen aber oftmals Probleme in Bezug auf den Tragegriff auf.

Entweder wird der Tragegriff angeformt, wodurch dann aber ein nicht unerheblicher Materialverbrauch gegeben ist. Zudem müssen Stanzungen vorgesehen werden, um ein Griffloch auszuformen oder auch dem Tragegriff selbst die gewünschte Form zu verleihen.

Es sind aber auch bandförmige Tragegriffe bekannt, die in einem extra Arbeitsschritt angebracht werden müssen.

Beide Varianten weisen zudem das Problem auf, dass diese eine Bedruckung in ihrem Bereich erschweren oder gar verhindern. Es geht wertvolle Werbefläche auf den Verpackungsbeuteln verloren.

Zudem behindern die Tragegriffe die Sicht auf die Oberseite der Verpackung und erschweren die Entnahme des Inhaltes aus dem Verpackungsbeutel.

Eingestanzte Grifföffnungen im Verpackungsbeutel scheiden aus, da damit die Verpackung beschädigt ist und nicht gewährleistet werden kann, dass das Verpackungsgut gegen Verschmutzungen geschützt ist.

In US 5431334 A, das als Stand der Technik gilt, wird eine Pappkartonbox beschrieben, bei der ein zusätzlich rotierbarer Tragegriff vorhanden ist, der aus einem flexiblen Kunststoff wie beispielsweise Polyethylen gefertigt sein kann. Der Tragegriff ist dabei an einer internen Zunge einer am Karton befestigten Drehscheibe z.B. mittels Ultraschallschweißens eines Bereichs befestigt und kann über eine bogenförmige Bewegung aus einer seitlichen Position in eine Trageposition rotiert werden.

In DE 8204931 U1 wird ein günstig herzustellender Tragegriff für Pappkartons, Netze oder Ähnlichem offenbart, der eine dünne gewebeverstärkte Kunststofffolie und eine weiche Kunststofffolie mit geringem Eigengewicht umfassen kann, um die Stabilität zu erhöhen. Der Tragegriff kann mit dem Verpackungsbehälter vernietet werden.

Der Erfindung liegt daher die Aufgabe zugrunde, einen Verpackungsbeutel mit einem Griff zu schaffen, der die vorgenannten Nachteile nicht aufweist.

Diese Aufgabe wird erfindungsgemäß dadurch gelöst, dass ein ein- oder mehrteiliges Kunststoffband entlang jeder Längsseite im Bereich der Oberseite bzw. Dachfläche um den Verpackungsbeutel umlaufend angeordnet ist, welches jeweils an der Schmalseite mit dem Verpackungsbeutel verschweißt ist.

Dadurch wird eine umlaufende Verteilung des Folienbandes erzielt, das sehr leicht ergriffen werden kann.

Außerdem wird damit ein einfach anzubringendes, aber dennoch weder die Entnahme des Verpackungsgutes erschwerender, noch die Sicht behindernder Tragegriff geschaffen.

Zudem kann die Bedruckung auf den Seiten ausgedehnt werden. Erfindungsgemäß hat es sich auch als sehr vorteilhaft erwiesen, wenn das Kunststoffband an zwei einander gegenüberliegenden Seiten des Verpackungsbeutels mit dem Verpackungsbeutel verschweißt ist.

Damit wird eine sichere Anbringung des als Tragegriff fungierenden Kunststoffbandes ermöglicht. Die Lastverteilung ist wenigstens annähernd gleichmäßig.

Dabei hat es sich als sehr vorteilhaft erwiesen, wenn die Verschweißung ringförmig oder flächig, und zwar kreisförmig oder oval ausgebildet ist.

Dadurch wird ein sicherer Halt der Verschweißung auch bei unterschiedlichen Belastungsrichtungen sichergestellt.

Eine weitere sehr vorteilhafte Ausgestaltung der Erfindung liegt auch vor, wenn die Verschweißung mittig zwischen den Längsseiten an den Schmalseiten angeordnet sind.

Hierdurch wird ein sehr hoher Tragekomfort erzielt.

Es hat sich erfindungsgemäß auch als sehr vorteilhaft erwiesen, wenn die Verschweißung zusammen mit der Bildung einer Naht des Verpackungsbeutels erfolgt ist.

Hierdurch muss kein gesonderter Arbeitsschritt zum Befestigen erfolgen.

Dabei ist es sehr vorteilhaft, wenn die beiden Folienbänder an ihren Enden miteinander verbunden sind.

Hiermit wird eine nochmals verbesserte Stabilität und Haltbarkeit der Folienbänder erreicht.

Eine weitere sehr vorteilhafte Weiterbildung der Erfindung liegt auch vor, wenn der Verpackungsbeutel auf seinen Seiten mit einer teilweisen oder vollflächigen Bedruckung versehen ist.

Damit wird eine große Werbefläche auf der Verpackung erschlossen.

Ebenfalls sehr vorteilhaft ist es erfindungsgemäß, wenn an der Oberseite und/oder an einer Seite des Verpackungsbeutels eine Entnahmeöffnung vorgesehen ist.

Durch diese Entnahmeöffnung kann das Verpackungsgut sehr leicht entnommen werden.

Eine sehr vorteilhafte Fortbildung der Erfindung liegt auch vor, wenn der Folienstreifen die Verpackung zur Oberseite hin teilweise überragt.

Hiermit lässt sich der Folienstreifen sehr leicht ergreifen.

Es hat sich auch als äußerst vorteilhaft erwiesen, wenn der Folienstreifen entlang der Längsseiten des Verpackungsbeutels wenigstens abschnittsweise angeheftet ist.

Dadurch wird ein versehentliches Hochziehen der Folienstreifen vermieden.

Dabei ist es sehr vorteilhaft, wenn der Folienstreifen mittels einer Perforation oder Schwächungslinie abtrennbar ausgebildet ist.

Damit wird eine sichere, aber dennoch leicht abtrennbare Befestigung erzielt.

Erfindungsgemäß ist es auch äußerst vorteilhaft, wenn der Folienstreifen aus einer ein- oder mehrlagigen Kunststofffolie gebildet ist.

Damit kann eine besonders haltbare Folienkonstruktion für den Folienstreifen geschaffen werden.

Eine weitere sehr vorteilhafte Ausgestaltung der Erfindung liegt auch vor, wenn der Folienstreifen eine Breite zwischen 20 und 80 Millimeter, vorzugsweise zwischen 40 und 60 Millimeter aufweist.

Bei einer derartigen Breite wird einerseits verhindert, daß der Folienstreifen unangenehm in die Hand des Trägers einschneidet, aber dennoch sehr leicht und materialsparend ist.

Im folgenden wird die Erfindung anhand eines Ausführungsbeispiels veranschaulicht.

Dabei zeigen:
- Fig. 1: eine schaubildliche Seitenansicht einer erfindungsgemäßen Verpackung mit hochgezogenen Tragebändern,
- Fig. 2: eine schaubildliche Schmalseitenansicht derselben Verpackung mit noch nicht hochgezogenen Tragebändem, und
- Fig. 3: eine schaubildliche Darstellung einer weiteren Verpackung mit noch nicht hochgezogenen Tragebändern.

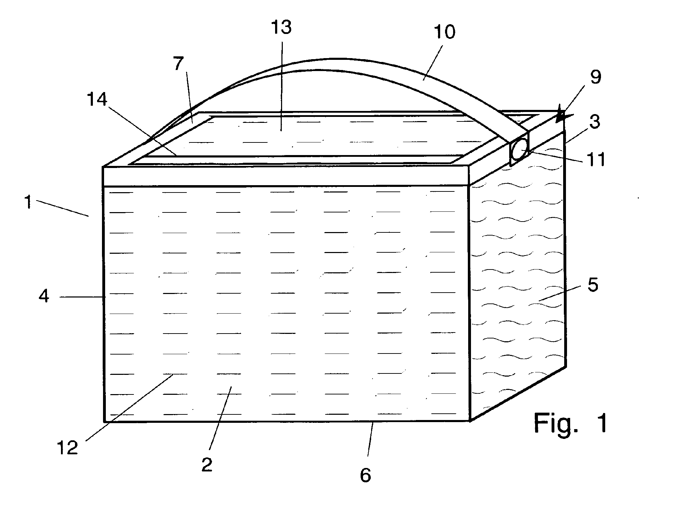

Mit 1 ist in Fig. 1 ein Verpackungsbeutel 1 bezeichnet, der aus zwei Längsseitenwänden 2 und 3, zwei Schmalseitenwänden 4 und 5, einem Boden 6 und einer Dachfläche 7. Der Verpackungsbeutel 1 ist aus einem Folienabschnitt 8 gebildet, der so gefaltet ist, daß die Dachfläche 7 gebildet ist und daran angelenkt die Längsseitenwände 2 und 3 angeordnet sind. Der Verpackungsbeutel 1 ist am Boden verschlossen. Die Seitenkanten des Folienabschnitts 8 sind im Bereich der Schmalseitenwände 4 und 5 miteinander verschweißt. Der Boden 6 ist nach dem Füllen des Verpackungsbeutels 1 verschlossen.

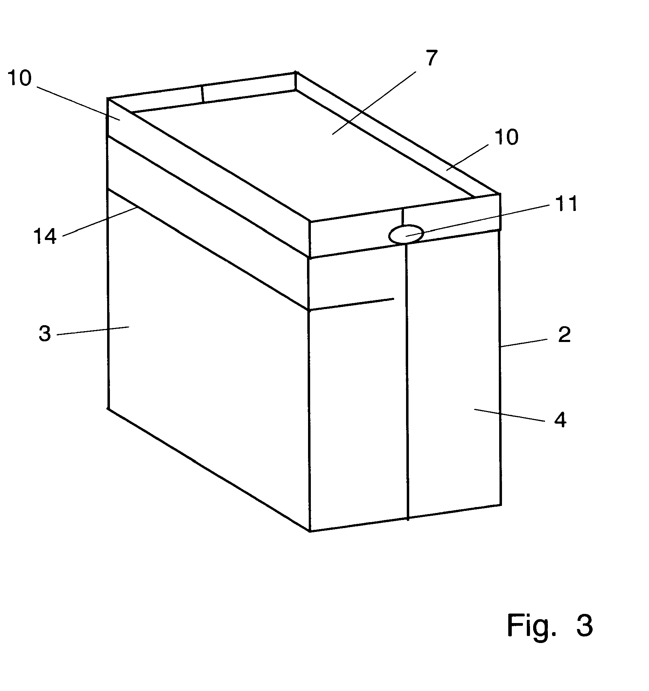

Auf den Seitenwänden 2, 3, 4 und 5 ist ein Aufdruck 12 vorgesehen. Auf der Dachfläche 7 kann ein weiterer Aufdruck 13 vorgesehen sein. Ebenfalls kann in der Dachfläche 7 eine Entnahmeöffnung 14 vorgesehen sein. Es ist aber auch denkbar, daß die Entnahmeöffnung 14 in einer Seitenwand vorgesehen ist, wie dies in Fig. 3 dargestellt ist.

An den Kanten 9 zwischen Schmalseitenwänden 4 und 5 und der Dachfläche 7 ist im Bereich der Schmalseitenwände 4 und 5 ein Folienband 10 angeschweißt. Der Schweißpunkt 11 ist oval ausgebildet.

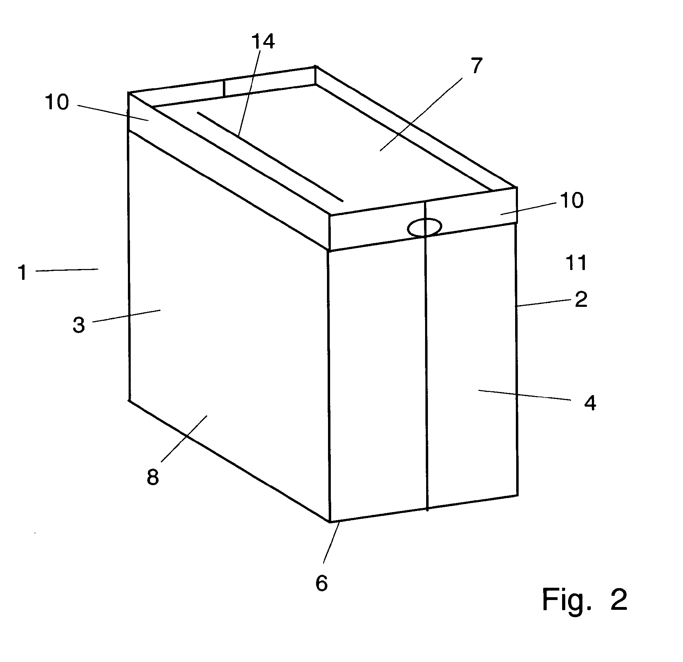

In den Figuren 1 und 2 ist das um den Verpackungsbeutel 1 herumgelegte Folienband hochgezogen und bildet so einen Tragegriff.

Das Folienband 10 ist in nicht hochgezogenem Zustand um die Kanten zwischen den Seitenwänden 2, 3, 4 und der Dachfläche 7 gelegt und behindert so weder den Aufdruck 12 auf den Seitenwänden 2, 3, 4 und 5, noch den Aufdruck 13, noch die Entnahmeöffnung 14.

Das Folienband 10 kann dabei über die Dachfläche 7 hinausstehen, so daß es leichter ergreifbar ist.

Der Verpackungsbeutel 1 kann aus einer ein- oder mehrlagigen Kunststofffolie gefertigt sein. An Materialien hierfür sind PE, PET, PP, PVOH, EVOH, PLA und andere denkbar. Insbesondere ist es denkbar, daß nachwachsende Rohstoffe und/oder biologisch abbaubare Rohstoffe zum Einsatz kommen.

Das Folienband 10 kann ebenfalls ein- oder mehrlagig ausgebildet sein und aus denselben Materialien wie der Verpackungsbeutel bestehen.

Gerade wenn im Verpackungsbeutel vergleichsweise schwere Güter verpackt werden, kann das Folienband 10 aus stabilem Material gefertigt sein.

Der Schweißpunkt 11 kann flächig oder ringförmig und dabei rund oder oval ausgebildet sein. Eine runde oder ovale Ausgestaltung sorgt für eine gleichmässige Krafteinleitung.

Das Folienband 10 kann einteilig oder mehrteilig ausgebildet sein. Es ist zum Beispiel denkbar, daß zwei Teilabschnitte des Folienbandes 10 auf Vorder- und Rückseite des Verpackungsbeutels 1 gelegt werden und dann beim Zuschweißen des Verpackungsbeutels 1 die beiden Teile des Folienbandes 10 mit dem Verpackunsgbeutel verschweißt werden.

Die beiden Teilabschnitte des Folienbandes 10 werden beim Abtrennen miteinander verbunden.

Es ist aber auch denkbar, daß die zwei Teilabschnitte des Folienbandes 10 zunächst separat am Verpackungsbeutel 1 angeschweißt werden. Danach kann eine weitere Schweißung beim Zuschweißen oder Abtrennen des Verpackunsgbeutels 1 erfolgen.

Durch die Ausgestaltung und Anordnung des Folienbandes 10 wird die für Bedruckungen nutzbare Seitenwandfläche vergrößert. Der weiße Bereich am Übergang zwischen Seitenwand und Dachfläche 7 kann kleiner ausgebildet werden.

Es ist denkbar, daß das Folienband 10 auch durch Verkleben oder Ansiegeln mit dem Verpackungsbeutel 1 verbunden wird.

Ebenso ist es denkbar, daß das Folienband 10 zwischen den Schweißpunkten 11 noch lösbar am Verpackungsbeutel befestigt ist.

Hier kann eine Perforation oder Schwächungslinie vorgesehen sein, die zwar einen sicheren Halt des Folienbandes 10 sicherstellt, aber dennoch eine leichte Ablösbarkeit ermöglicht, wodurch sichergestellt wird, daß das Folienband nicht unbeabsichtigt hochgezogen wird.

## Patentansprüche

1. Verpackungsbeutel (1) mit zwei Längsseiten (2, 3), zwei Schmalseiten (4, 5) sowie einer Oberseite bzw. Dachfläche (7) und einer Unterseite (6), aus einer oder mehreren Kunststofffolienlagen, sowie mit einem Tragegriff (10), **dadurch gekennzeichnet, dass** ein ein- oder mehrteiliges Kunststoffband (10) entlang jeder Längseite (2,3) im Bereich der Oberseite um den Verpackungsbeutel (1) umlaufend angeordnet ist, welches jeweils an der Schmalseite (4, 5) mit dem Verpackungsbeutel (1) verschweißt ist.

2. Verpackungsbeutel nach Anspruch 1, **dadurch gekennzeichnet, dass** das Kunststoffband (10) an zwei einander gegenüberliegenden Seiten des Verpackungsbeutels (1) mit dem Verpackungsbeutel (1) verschweißt ist.

3. Verpackungsbeutel nach Anspruch 2, **dadurch gekennzeichnet, dass** die Verschweißung (11) ringförmig oder flächig, und zwar kreisförmig oder oval ausgebildet ist.

4. Verpackungsbeutel nach Anspruch 2 oder 3, **dadurch gekennzeichnet, dass** die Verschweißung (11) mittig zwischen den Längsseiten (2, 3) an den Schmalseiten (4, 5) angeordnet sind.

5. Verpackungsbeutel nach Anspruch 2, 3 oder 4, **dadurch gekennzeichnet, dass** die Verschweißung (11) zusammen mit der Bildung einer Naht des Verpackungsbeutels (1) erfolgt ist.

6. Verpackungsbeutel nach Anspruch 1, **dadurch gekennzeichnet, dass** die beiden Folienbänder (10) an ihren Enden miteinander verbunden sind.

7. Verpackungsbeutel nach einem der vorangehenden Ansprüche, **dadurch gekennzeichnet, dass** der Verpackungsbeutel (1) auf seinen Seiten mit einer teilweisen oder vollflächigen Bedruckung (12, 13) versehen ist.

8. Verpackungsbeutel nach einem der vorangehenden Ansprüche, **dadurch gekennzeichnet, dass** an der Oberseite (7) und/oder an einer Seite (2, 3, 4, 5) des Verpackungsbeutels (1) eine Entnahmeöffnung (14) vorgesehen ist.

9. Verpackungsbeutel nach einem der vorangehenden Ansprüche, **dadurch gekennzeichnet, dass**
der Folienstreifen (10) die Verpackung (1) zur Oberseite (7) hin teilweise überragt.

10. Verpackungsbeutel nach einem der vorangehenden Ansprüche, **dadurch gekennzeichnet, dass** der Folienstreifen (10) entlang der Längsseiten (2,3) des Verpackungsbeutels (1) wenigstens abschnittsweise angeheftet ist.

11. Verpackungsbeutel nach Anspruch 10,
**dadurch gekennzeichnet, dass** der Folienstreifen (10) mittels einer Perforation oder Schwächungslinie abtrennbar ausgebildet ist.

12. Verpackungsbeutel nach einem der vorangehenden Ansprüche, **dadurch gekennzeichnet, dass**
der Folienstreifen (10) aus einer ein- oder mehrlagigen Kunststofffolie gebildet ist.

13. Verpackungsbeutel nach einem der vorangehenden Ansprüche, **dadurch gekennzeichnet, dass**
der Folienstreifen (10) eine Breite zwischen 20 und 80 Millimeter, vorzugsweise zwischen 40 und 60 Millimeter aufweist.

## Claims

1. Packaging bag (1) having two longitudinal sides (2, 3), two narrow sides (4, 5) and a top side or roof surface (7) and a bottom side (6), produced from one or more layers of plastics material foil, as well as having a carrying handle (10), **characterized in that** along each longitudinal side (2, 3) a single-part or multi-part plastics material strip (10) is arranged so as to pass around the packaging bag (1) in the region of the top side, and this strip is welded to the packaging bag (1) on each narrow side (4, 5).

2. Packaging bag according to Claim 1, **characterized in that** the plastics material strip (10) is welded to the packaging bag (1) at two opposite sides of the packaging bag (1).

3. Packaging bag according to Claim 2, **characterized in that** the welding (11) is realized in a ring-shaped or planar manner, and in a circular or oval manner.

4. Packaging bag according to Claim 2 or 3, **characterized in that** the welding (11) is arranged in the middle of the narrow sides (4, 5) between the longitudinal sides (2, 3).

5. Packaging bag according to Claim 2, 3 or 4, **characterized in that** the welding (11) is effected together with the forming of a seam of the packaging bag (1).

6. Packaging bag according to Claim 1, **characterized in that** the two foil strips (10) are connected to each other at the ends thereof.

7. Packaging bag according to one of the preceding claims, **characterized in that** the packaging bag (1) is provided on the sides thereof with printing (12, 13) over part or all of the surface.

8. Packaging bag according to one of the preceding claims, **characterized in that** a removal opening (14) is provided at the top side (7) and/or at one side (2, 3, 4, 5) of the packaging bag (1).

9. Packaging bag according to one of the preceding claims, **characterized in that** the foil strip (10) projects in part above the packaging (1) towards the top side (7).

10. Packaging bag according to one of the preceding claims, **characterized in that** the foil strip (10) is tacked at least in sections along the longitudinal sides (2, 3) of the packaging bag (1).

11. Packaging bag according to Claim 10, **characterized in that** the foil strip (10) is realized so as to be separable by means of a perforation or tear-line.

12. Packaging bag according to one of the preceding claims, **characterized in that** the foil strip (10) is formed from a single-layer or multi-layer plastics material foil.

13. Packaging bag according to one of the preceding claims, **characterized in that** the width of the foil strip (10) is between 20 and 80 millimetres, preferably between 40 and 60 millimetres.

## Revendications

1. Sac d'emballage (1) comprenant deux côtés longs (2, 3), deux côtés courts (4, 5) ainsi qu'un côté supérieur ou une surface de recouvrement (7) et un côté inférieur (6), constitué d'une ou plusieurs couches de film plastique, ainsi qu'une poignée de préhension (10), **caractérisé en ce qu'**une bande de plastique (10) en une ou plusieurs parties est disposée le long de chaque côté long (2, 3) dans la région du côté supérieur tout autour du sac d'emballage (1), laquelle bande de plastique est à chaque fois soudée au sac d'emballage (1) au niveau du côté court (4, 5).

2. Sac d'emballage selon la revendication 1, **caractérisé en ce que** la bande de plastique (10) est soudée au sac d'emballage (1) au niveau de deux côtés opposés du sac d'emballage (1).

3. Sac d'emballage selon la revendication 2, **caractérisé en ce que** le soudage (11) est réalisé sous forme annulaire ou plane, et en l'occurrence sous forme circulaire ou ovale.

4. Sac d'emballage selon la revendication 2 ou 3, **caractérisé en ce que** le soudage (11) est réalisé centralement entre les côtés longs (2, 3) au niveau des côtés courts (4, 5).

5. Sac d'emballage selon la revendication 2, 3 ou 4, **caractérisé en ce que** le soudage (11) a lieu conjointement avec la formation d'un joint du sac d'emballage (1).

6. Sac d'emballage selon la revendication 1, **caractérisé en ce que** les deux bandes de film (10) sont connectées l'une à l'autre au niveau de leurs extrémités.

7. Sac d'emballage selon l'une quelconque des revendications précédentes, **caractérisé en ce que** le sac d'emballage (1) est pourvu sur ses côtés d'une impression (12, 13) partielle ou sur toute la surface.

8. Sac d'emballage selon l'une quelconque des revendications précédentes, **caractérisé en ce qu'**une ouverture de prélèvement (14) est prévue sur le côté supérieur (7) et/ou sur un côté (2, 3, 4, 5) du sac d'emballage (1).

9. Sac d'emballage selon l'une quelconque des revendications précédentes, **caractérisé en ce que** le ruban de film (10) dépasse partiellement de l'emballage (1) en direction du côté supérieur (7).

10. Sac d'emballage selon l'une quelconque des revendications précédentes, **caractérisé en ce que** le ruban de film (10) est broché au moins en partie le long des côtés longs (2, 3) du sac d'emballage (1).

11. Sac d'emballage selon la revendication 10, **caractérisé en ce que** le ruban de film (10) est réalisé de manière sectionnable au moyen d'une perforation ou d'une ligne d'affaiblissement.

12. Sac d'emballage selon l'une quelconque des revendications précédentes, **caractérisé en ce que** le ruban de film (10) est formé d'un film en plastique à une ou plusieurs couches.

13. Sac d'emballage selon l'une quelconque des revendications précédentes, **caractérisé en ce que** le ruban de film (10) présente une largeur comprise entre 20 et 80 millimètres, de préférence entre 40 et 60 millimètres.
